# EUROPEAN PATENT SPECIFICATION

(11) **EP 2 205 035 B1**
(45) Date of publication and mention of the grant of the patent: **30.12.2015**
(21) Application number: 09360002.1
(22) Date of filing: 05.01.2009
(51) Int. Cl.: H04W 72/08, H04W 88/12

(54) **Data transmission control with network coordination via backhaul**
Datenübertragungssteuerung mit Netzkoordination über Rücktransport
Contrôle de transmission de données avec de coordination de réseau par liaison terrestre

(43) Date of publication of application: 07.07.2010
(73) Proprietor: ALCATEL LUCENT, 92100 Boulogne-Billancourt (FR)
(72) Inventor: Boccardi, Federico, Swindon, Wiltshire SN1 2EE (GB); Alexiou, Angeliki, Swindon, Wiltshire, SN5 5FH (GB)
(74) Representative: Sarup, David Alexander

(56) References cited:
- WO-A-2007/147810
- US-A1- 2003 002 460
- MARSCH P ET AL: "A Framework for Optimizing the Uplink Performance of Distributed Antenna Systems under a Constrained Backhaul" COMMUNICATIONS, 2007. ICC '07. IEEE INTERNATIONAL CONFERENCE ON, IEEE, PI, 1 June 2007 (2007-06-01), pages 975-979, XP031125798 ISBN: 978-1-4244-0353-0

## Description

### FIELD OF THE INVENTION

The present invention relates to a method of controlling data transmissions, a network controller and a computer program product.

### BACKGROUND OF THE INVENTION

In a conventional cellular telecommunications network, throughput is generally limited by co-channel interference. This co-channel interference has generally two forms; interference generated within a sector (intrasector interference) and interference generated by nearby cells (intersector interference). Intrasector interference can be ameliorated by orthogonal channel allocation techniques, such as orthogonal frequency divisional multiple access. Intersector interference can be reduced in several ways. For example, such interference can be reduced through frequency planning, soft handoffs and utilising beam-forming multiple antennas.

M. K. Karakayali, G. J. Foschini and R. A. Valenzuela, "Network coordination for Spectrally Efficient Communications in Cellular Systems", IEEE Wireless Communications Magazine, Aug. 2006, describes a technique for eliminating intersector interference by coordinating transmission of signals between base stations in the entire network. Each signal is transmitted simultaneously from multiple sector antennas of multiple base stations and the signals are weighted and pre-processed so that intersector interference is mitigated or completely eliminated. Assuming full coordination between the M antennas of all B sectors in the network, the behaviour of the network is the same as a multi-user multi-input multi-output (MU-MIMO) network with B x M distributed antennas and hybrid per-cluster power constraints, where clusters of antennas at the same base station are subject to some-power constraints but power is not shared between antennas belonging to different clusters.

P. Marsch and G. Fettweis, "A Framework for Optimizing the Uplink Performance of Distributed Antenna Systems under a Constrained Backhaul", in Proc. Of ICC Apr. 2007 and P. Marsch and G. Fettweis, "A Framework for Optimizing the Downlink Performance of Distributed Antenna Systems under a Constrained Backhaul", in Proc. of EW, Apr. 2007 describe techniques for uplink and downlink transmission such that user equipment is divided into groups using orthogonal resources and coordination only occurs between cells containing user equipment belonging to the same group.

S. Venkatesan, "Coordinating base stations for grater uplink spectral efficiency in a cellular systems", in Proc. of PIMRC, Sept. 2007 and F. Rashid-Farrokhi, L. Tassiulas and K. J. R. Liu, "Joint optimal power control and beamforming in wireless networks using antenna arrays", IEEE Trans. Commun., vol. 46, pp. 1313-1324, Oct. 1998 describes techniques for uplink transmission which assumes the same quality of service is to be provided to each user equipment.

US 2003/002460 A1 discloses a communications system which manages guarantee of service requirements for various users. Transmission between users and base stations is possible in two modes; armed handoff and soft handoff. In armed handoff, transmission occurs with a single base station. In soft handoff, simultaneous transmission occurs with more that one base station. Mobile stations monitor pilot signals and, when a pilot signal is received above a threshold, the mobile station requests that that further base station be added to the active set of base stations. A determination is made of whether to transmit using armed handoff or soft handoff.

It is desired to provide an improved technique for controlling data transmissions within a telecommunications network.

### FIELD OF THE INVENTION

According to a first aspect of the present invention, there is provided a method of controlling data transmissions within a cellular telecommunications network as claimed in claim 1.

The first aspect recognises that full network coordination can require a huge amount of traffic on the backhaul to support signalling and data transmissions, and that it is desirable where possible to reduce the amount of backhaul traffic required to support data transmissions to user equipment. Accordingly, a determination is made of an uncoordinated quality of service and a coordinated quality of service for data transmissions to the user equipment. It may established which of these quality of service levels achieve a quality of service level desired by the user equipment and, when the desired quality of service level is only achieved in the coordinated mode, then data transmissions occur in the coordinated mode.

Through this approach traffic on the backhaul is limited since coordination is only performed when absolutely necessary and the extent of coordination is limited to a predictable and controllable level. In other words, only when coordination is necessary is the coordinated mode utilised. It will be appreciated that this limits coordination and the amount of backhaul traffic to only those data transmissions where this is absolutely necessary. Also, by performing coordination between only up to a predetermined plurality of antennas within different cells ensures that when coordination is necessary, such coordination occurs among a controlled and limited subset of the antennas within the network.

Furthermore, the decision on coordination may take place per user equipment, rather than assuming that all user equipment experiencing a low quality of service need to be coordinated. This is because there could be a maximum allowable number of feedback bits between users and base stations.
Additionally, by controlling the amount of coordination that occurs, instantaneous quality of service measurements may be utilised in order to opportunistically determine the correct transmission mode for that user equipment, whereas, with previous techniques, the amount of coordination required meant that only average quality of service levels could be utilised, which can often lead to sub-optimal data transmissions.

In one embodiment, the step of determining comprises determining a plurality of coordinated quality of service levels provided to user equipment for data transmissions occurring in a corresponding plurality of coordinated modes, each of the plurality of coordinated modes utilising up to the predetermined plurality of antennas and each of the plurality of coordinated modes utilising antennas from differing at least two cells, the step of establishing comprises establishing which of the at least one uncoordinated mode and the plurality of coordinated modes provides the desired quality of service to the user equipment and the step of signalling comprises, when one of the plurality of coordinated modes provides the desired quality of service to the user equipment, signalling base stations associated with the differing at least two cells to perform data transmissions with the user equipment in the one of the plurality of coordinated modes. Accordingly, quality of service levels for different coordinated modes may be established. Each of the different coordinated modes may typically utilise the same total number of antennas; these antennas may be provided by different cells. As it will be appreciated, each of these different coordinated configurations will likely provide a different quality of service level to the user equipment. When it is determined that only one of those different coordinated modes provided the desired quality of service to the user equipment, then the base stations associated with the antennas utilised in that coordinated mode may be signalled to perform data transmission with the user equipment.

In one embodiment, each of the plurality of coordinated modes utilises up to the predetermined plurality of antennas to form the corresponding virtual cell comprising a predetermined number of sectors, each sector within the virtual cell being provided by one base station associated with the differing at least two cells. Accordingly, each coordinated mode forms a virtual cell within the network. It will be appreciated that these virtual cells for one particular coordinated mode may then be replicated throughout the network. Preferably, a number of different virtual cell arrangements, and therefore a number of different corresponding coordinated modes, may be required in order to optimise coordination. Preferably, enough different virtual cell arrangements may be required in order to ensure that every cell vertex within the network may be centred within a virtual cell. For example, in a six-sector cell arrangement, two coordinated modes utilising six adjacent antennas may be required to ensure that every vertex in the cell may be centred within a virtual cell.

In one embodiment, the number of sectors provided by each base station comprise a subset of those sectors supported by that base station. Accordingly, each sector within the virtual cell may be provided by a sector associated with a particular base station. For example, adjacent base stations may each provide a number of the sectors they support to collectively form a virtual cell.

In one embodiment, sectors within the virtual cell are adjacent each other. It will be appreciated that the adjacent nature may include both geographically or physically adjacent, as well as logically adjacent arrangements.

In one embodiment, the step of establishing comprises selecting the at least one uncoordinated mode when the at least one uncoordinated quality of service level exceeds a predetermined threshold level. Accordingly, whenever one of the uncoordinated modes achieves the desired quality of service then this mode will be selected in preference to the coordinated modes in order to reduce the amount of coordination required and therefore the amount of backhaul traffic.

In one embodiment, the step of establishing comprises selecting the at least one uncoordinated mode when the at least one uncoordinated quality of service level exceeds the at least one of the coordinated quality of service levels. Accordingly, the uncoordinated mode will also take preference over the coordinated mode if neither achieves the desired quality of service level, but the quality of service level provided by the uncoordinated mode still exceeds that of the coordinated mode in order to reduce the amount of coordination required and therefore the amount of backhaul traffic.

In one embodiment, the method comprises the step of: when the at least one uncoordinated mode provides the desired quality of service to the user equipment, signalling the single one of the plurality of base stations to perform data transmissions with the user equipment in the at least one uncoordinated mode. Accordingly, when the uncoordinated mode is selected, only one base station need be signalled in order to perform uncoordinated data transmissions. Of course, it will be appreciated that in some implementations, such signalling may not be required since base stations may assume that they are required to transmit by default in the uncoordinated mode.

In one embodiment, there is provided a plurality of user equipment and the steps of determining and establishing are performed for each of the plurality of user equipment, the method comprises the step of: ordering indications of user equipment required performed data transmissions in the at least one coordinated mode in a list accordance with a predetermined criteria. Accordingly, when there is provided more than one user equipment, an indication of each of those user equipment which have been determined as being required to perform data transmissions in one of the coordinated modes is listed in accordance with predetermined criteria in order to help determine the allocation of backhaul resources.

In one embodiment, the step of ordering comprises prioritising in the list indications of user equipment having a higher quality of service requirement. Accordingly, those user equipment having the highest quality of service requirements are prioritised in the list to improve the likelihood that these user equipment will achieve that quality of service.

In one embodiment, the step of ordering comprises prioritising in the list indications of user equipment having a greatest difference between the quality of service requirement and the at least one coordinated quality of service level. Accordingly, those user equipment which struggle the most to achieve the desired quality of service level, even in the coordinated mode, are prioritised in the list to improve the likelihood of the best possible quality of service level being provided to that user equipment.

In one embodiment, the method comprises the step of: determining for each user equipment; in an order specified by the list, an amount of signalling resources required to be allocated enable that user equipment to perform data transmissions in the at least one coordinated mode. Accordingly, in accordance with the order specified by the list, the resources required to enable the user equipment to be communicated with in the coordinated mode is determined to help quantify the amount of signalling resources that may be required.

In one embodiment, the method comprises the step of: determining for each user equipment, in the order specified by the list, whether sufficient unallocated signalling resources remain to enable that user equipment to perform data transmissions in the at least one coordinated mode. Accordingly, a determination can be made for each user equipment of whether sufficient signalling resources are available to enable that user equipment to be communicated with in a coordinated mode.

In one embodiment, the method comprises the step of: when it is determined that insufficient unallocated signalling resources remain to enable further user equipment to perform data transmissions in the coordinated mode, signalling that data transmissions with the further user equipment should occur in the at least one uncoordinated mode. Hence, should it be established that even though a user equipment requires to be communicated with in a coordinated mode, there will be insufficient resources available to perform this communication, that user equipment is instead communicated with in an uncoordinated mode. It will be appreciated that this helps to control the demands required on the backhaul and, in conjunction with the listing prioritising criteria, helps to ensure that the finite backhaul resources are utilised in the best possible way.

In one embodiment, the method comprises the steps of: multiplexing said data transmissions with said user equipment in said at least one coordinated and uncoordinated modes; and adjusting said multiplexing in response to changes in transmissions performed in said at least one coordinated and uncoordinated modes. Accordingly, the multiplexing scheme used may be adjusted in response to the data transmission requirements. For example, should an increase or decrease in data transmissions in one of the modes occur, then the length of the time slot or number of frequency channels allocated to transmission in that mode may likewise be increased or decreased.

In one embodiment, said step of signalling occurs during data transmissions with said user equipment in said at least one uncoordinated mode. Enabling the signalling to take place when transmissions are occurring in the uncoordinated mode helps to reduce peak loading since this utilises the backhaul during a period when it would not otherwise be utilised to support data transmissions.

In one embodiment, the method comprises the step of: reducing peak demand on signalling resources by distributing the signalling to base stations. By distributing the signalling, the peak exchange levels between base stations is reduced. For example, in a time-domain switching environment, the exchange may be arranged to occur over the complete time-slot or the proportion of allocated time-slot increased. Likewise, in a frequency-domain switching environment, the number of frequency channel allocated may be increased. Furthermore, in hybrid environments, frequency and time allocations may be increased to reduce peak exchange levels,

According to a second aspect of the second invention there is provided a network controller as claimed in claim 15.

It will be appreciated that the network controller may be provided as a geographically separate entity within the network, or may be collocated with one of the base stations.

In one embodiment, the reception logic is operable to determine a plurality of coordinated quality of service levels provided to user equipment for data transmissions occurring in a corresponding plurality of coordinated modes, each of the plurality of coordinated modes utilising up to the predetermined plurality of antennas and each of the plurality of coordinated modes utilising antennas from differing at least two cells, the mode establishing logic is operable to establish which of the at least one uncoordinated mode and the plurality of coordinated modes provides the desired quality of service to the user equipment and the signalling logic is operable, when one of the plurality of coordinated modes provides the desired quality of service to the user equipment, to signal base stations associated with the differing at least two cells to perform data transmissions with the user equipment in the one of the plurality of coordinated modes.

In one embodiment, each of the plurality of coordinated modes utilises up to the predetermined plurality of antennas to form the corresponding virtual cell comprising a predetermined number of sectors, each sector within the virtual cell being provided by one the base stations associated with the differing at least two cells.

In one embodiment, the number of sectors provided by each base station comprises a subset of those sectors supported by that base station.

In one embodiment, sectors within the virtual cell are adjacent each other.

In one embodiment, the mode establishing logic is operable to select the at least one uncoordinated mode when the at least one uncoordinated quality of service level exceeds a predetermined threshold level.

In one embodiment, the mode establishing logic is operable to select the at least one uncoordinated mode when the at least one uncoordinated quality of service level exceeds the at least one of the coordinated quality of service levels.

In one embodiment, the signalling logic is operable, when the at least one uncoordinated mode provides the desired quality of service to the user equipment, to signal the single one of the plurality of base stations to perform data transmissions with the user equipment in the at least one uncoordinated mode.

In one embodiment, there is provided a plurality of user equipment, the network controller comprising: ordering logic operable to order indications of user equipment required performed data transmissions in the at least one coordinated mode in a list accordance with a predetermined criteria.

In one embodiment, the ordering logic is operable to prioritise in the list indications of user equipment having a higher quality of service requirement.

In one embodiment, the ordering logic is operable to prioritise in the list indications of user equipment having a greatest difference between the quality of service requirement and the at least one coordinated quality of service level.

In one embodiment, the network controller comprises resource determining logic operable to determine for each user equipment, in an order specified by the list, an amount of signalling resources required to be allocated enable that user equipment to perform data transmissions in the at least one coordinated mode.

In one embodiment, the network controller comprises resource determining logic operable to determine for each user equipment, in the order specified by the list, whether sufficient unallocated signalling resources remain to enable that user equipment to perform data transmissions in the at least one coordinated mode.

In one embodiment, the signalling logic is operable, when it is determined that insufficient unallocated signalling resources remain to enable further user equipment to perform data transmissions in the coordinated mode, to signal that data transmissions with the further user equipment should occur in the at least one uncoordinated mode.

In one embodiment, the network controller comprises logic operable to multiplex the data transmissions with the user equipment in the at least one coordinated and uncoordinated modes and to adjust the multiplexing in response to changes in transmissions performed in the at least one coordinated and uncoordinated modes.

In one embodiment, the signalling logic is operable to cause the signalling to occur during data transmissions with the user equipment in the at least one uncoordinated mode to reduce peak demand on signalling resources.

In one embodiment, the network controller comprises logic operable to reduce peak demand on signalling resources by distributing the signalling to base stations.

According to a third aspect of the present invention there is provided a computer program product operable when executed on a computer to perform the method steps of the first aspect.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings in which:
Figure 1 is a schematic diagram illustrating a wireless communications system according to one embodiment;
Figures 2 to 4 illustrate virtual cell arrangements;
Figure 5 illustrates the main processing steps of the network controller shown in Figure 1;
Figure 6 is a schematic diagram illustrating an arrangement of the network controller shown in Figure 1; and
Figure 7 illustrates an implementation in a time-domain switching environment; and
Figure 8 illustrates an implementation in a frequency-domain switching environment.

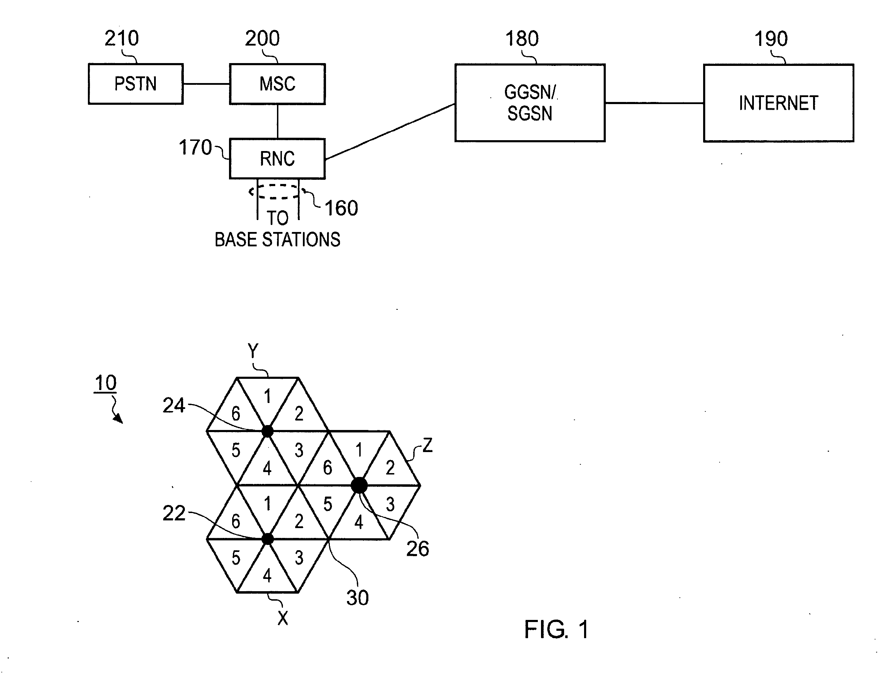

Figure 1 illustrates a wireless communication system, generally 10, according to one embodiment. User equipment 30 roam through the wireless communication system 10. Base stations 22, 24, 26 are provided which support respective cells X, Y, Z. A number of such base stations are provided, which are distributed geographically in order to provide a wide area of coverage to the user equipment 30. When user equipment 30 is within a cell 24 supported by the.base station 22 then communications may be established between the user equipment 30 and the base station 22 over an associated radio link. Each base station supports a number of sectors, in this example there are six sectors although other numbers of sectors may be supported. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 20 is managed by a network controller 170 which includes a radio network controller (RNC) and an operations administration manager (OAM). The network controller 170 controls the operation of the wireless communications system 20 by communicating with the base stations 22, 24, 26 over a backhaul communications link 160. The network controller 170 also communicates with the user equipment 44 via their respective radio links in order to efficiently manage the wireless communication system 20.

The network controller 170 maintains a neighbour list which includes information about the geographical relationship between cells supported by base stations. In addition, the network controller 170 maintains historic location information which provides information on the previous locations of the user equipment within the wireless communications system 20 to enable future predictions on user equipment location to be made. The network controller 170 is operable to route traffic via circuit-switched and packet-switched networks. Hence, a mobile switching centre 200 is provided with which the radio network controller 170 may communicate. The mobile switching centre 200 then communicates with a circuit-switched network such as a public switched telephone network (PSTN) 210. Likewise, the network controller 170 communicates with service general packet radio service support nodes (SGSNs) and a gateway general packet radio support node (GGSN) 180. The GGSN then communicates with a packet-switch core 190 such as, for example, the Internet.

As mentioned previously, communication between user equipment and a base station within a sector may be subject to interference from transmissions within that sector, and from transmissions from neighbouring sectors either within the same cell or from an adjacent cell. Pilot signals are transmitted between a base station and user equipment to provide channel state information and enable an assessment of the quality of service provided to the user equipment, which provides an indication of the levels of interference being experienced during communication with that user equipment. By coordinating data transmissions from different antennas within the same cell or different cells it is possible to reduce the amount of such interference. However, as mentioned above, the amount of available backhaul bandwidth is limited and so if there is a need to limit the amount of coordination between transmissions by reducing the amount of data transmitted over the backhaul between base stations. Accordingly, the extent of base station coordination is limited to a predetermined amount and is realised as a function of backhaul availability, starting from the weakest users, using accurate and up to date channel state information. In particular, an assessment is using channel state information on the interference experienced when operating in a number of different uncoordinated modes (in which no coordination between base stations occurs and interference is reduced by a single base station controlling transmissions from different antennas within its sectors) and in a number of different coordinated modes (in which coordination between a predetermined number of base stations occurs and interference is reduced by those base stations controlling transmissions from different antennas within their sectors), as will be described in more detail below.

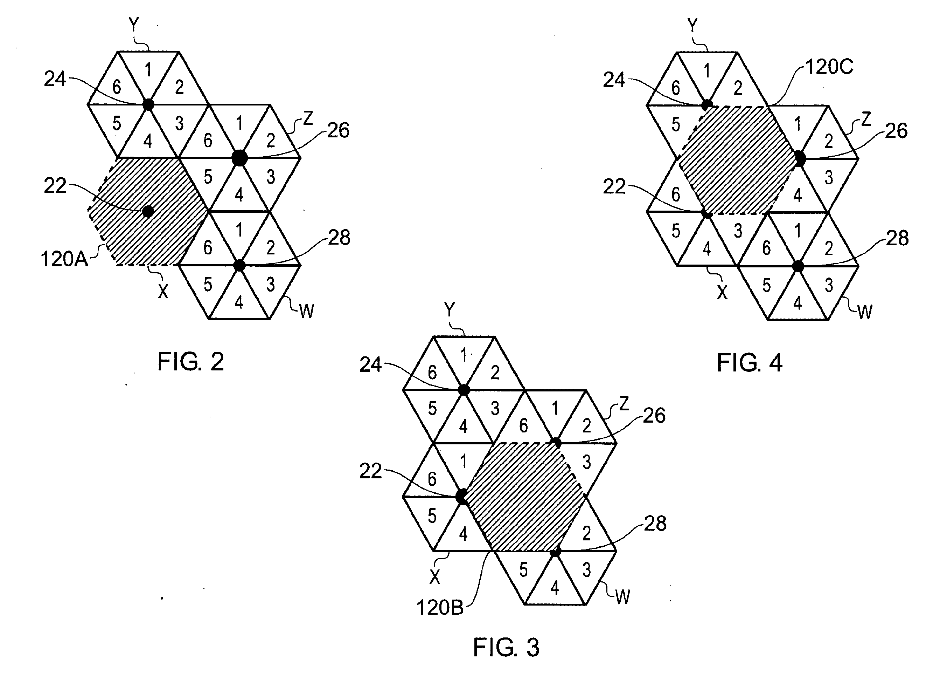

Figure 2 shows an uncoordinated mode in which antennas within a single cell are arranged to perform data transmissions with user equipment. It will be appreciated that different antenna weighting may be utilised to provide different uncoordinated modes provided by base station 22. The six sectors within the cell form a virtual cell 120A which coincides with the geographical coverage provided by base station 22. The virtual cell 120A may be replicated across the network to provide a plurality of adjacent virtual cells 120A. For example, base stations 24, 26, 28 will each provide a virtual cell 120A formed by the sectors provided by those base stations. When performing data transmissions with user equipment in an uncoordinated mode, each base station seeks to reduce interference due .to transmissions made by that base station within that virtual cell. Since each base station acts alone, there is no need for any additional data to be transmitted over the backhaul 160 to other base stations since there is no cooperation between sectors belonging to different cells.

Figure 3 shows a first coordinated mode in which a virtual cell 120B is formed comprising sectors from cells X, W and Z; in particular, sectors 5 and 4 provided from cell Z and supported by base station 26, cells 2 and 3 provided from cell X and supported base station 22, and cells 6 and 1 provided from cell W and supported by base station 28. Accordingly, the three base stations act as a group. The virtual cell 120B may be replicated across the network using other groups of base stations to provide a plurality of adjacent virtual cells 120B. In other words, a further virtual cell 120B will be formed using sectors 5 and 4 of cell Y, sectors 6 and 1 of cell X and sectors 2 and 3 of a cell not shown in Figure 3, and so on. When performing data transmissions with user equipment in this first coordinated mode, each group of base stations seek to reduce interference due to transmissions made within that virtual cell. For example, for the virtual cell 120B shown, this involves transmitting data between base stations 22, 26 and 28 over the backhaul 160 to enable such coordination to occur.

Figure 4 shows a second coordinated mode in which a virtual cell 120C is formed using sectors 3 and 4 provided by cell Y and supported by base station 24, sectors 1 and 2 from cell X and supported by base station 22 and sectors 5 and 6 provided by cell Z and supported by base station 26. Accordingly, the three base stations act as a group. The virtual- cell 120C may be replicated across the network using other groups of base stations to provide a plurality of adjacent virtual cells 120C. In other words, a further virtual cell 120C will be formed using sectors 3 and 4 of cell Z, sectors 1 and 2 of cell W and sectors 5 and 6 of a cell not shown in Figure 4, and so on. When performing data transmissions with user equipment in this second coordinated mode, each group of base stations seek to reduce interference due to transmissions made within that virtual cell. For example, for the virtual cell 120C shown, this involves transmitting data between base stations 22, 24 and 26 over the backhaul 160 to enable such coordination fo occur.

Hence, in the coordinated or distributed configuration, cooperation occurs between 6 sectors from 3 different cells. This configuration requires data exchange between the 3 different base station supporting those 6 sectors. Conversely, in the uncoordinated or non-distributed configuration, cooperation occurs between 6 sectors from the same cell. This configuration requires no data exchange between base stations.

By forming virtual cells having typically the same number of sectors as a cell, the extent of coordination and the amount of backhaul traffic which occurs can be limited. By forming virtual cells made of adjacent sectors, the vast majority of interference can be ameliorated against since that interference is most likely to come from those adjacent sectors. It is desirable to provide as many different virtual cell arrangements as required in order to ensure that a sector vertex can always be centred within a virtual cell, thereby helping to ensure control over adjacent sectors. This is achieved in a six sector cell arrangement, such as that shown in Figures 2 to 4, by providing three virtual cell arrangements: the uncoordinated virtual cell shown in Figure 2, together with the two coordinated virtual cell arrangements shown in Figures 3 and 4. However, the number of virtual cell arrangements will differ depending on the number of sectors provided within cells.

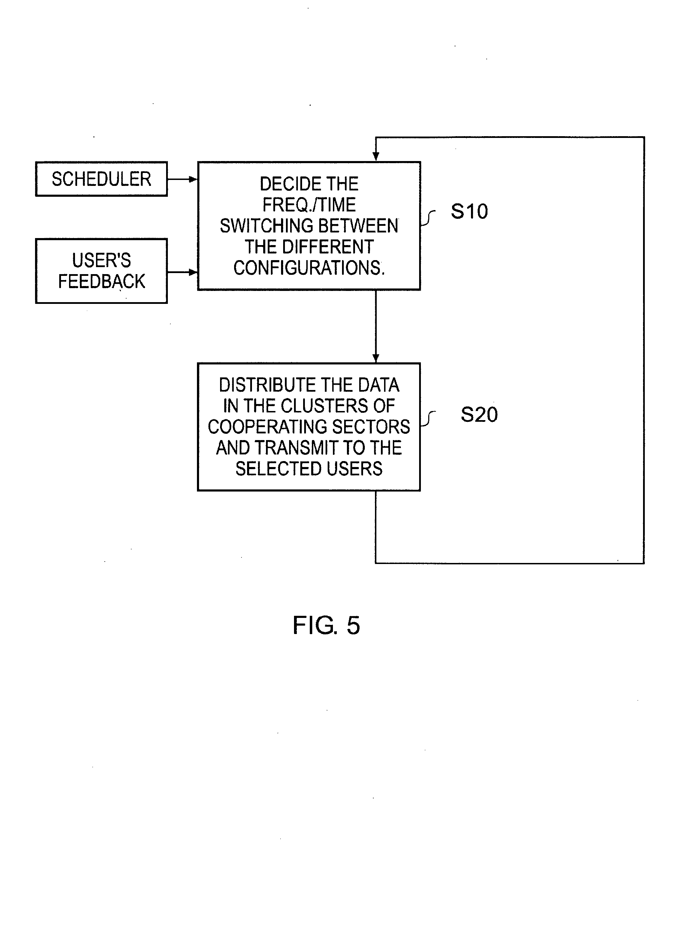

Figure 5 illustrates the main processing steps of the network controller 170 when considering whether to coordinate data transmissions.

At step S 10, the optimal switching between the different configurations is determined. This is established by transmitting pilot signals from each sector for each of the configurations. For example, pilot signals may be sent to user equipment in the any of the uncoordinated modes shown in Figure 2. The signal to noise plus interference of those received pilot signals may then be fed back to the associated base stations to provide an indication of the channel state or quality of service of the data transmissions made in those uncoordinated modes. Likewise, pilot signals may be sent to user equipment for each of the coordinated modes, the signal to noise plus interference ratio fed back to the associated base stations for each of those further configurations and this information collated by the network controller 170 to provide an indication of the interference picture for each of the user equipment when communicated with under the different modes. For example, assuming that pilots are sent from each sector, and that a fixed beam approach is used, each user equipment could estimate the signal to noise plus interference obtained with the different configurations and reports these to the base station. Alternatively, the user equipment may report to the base station only the best signal to interference plus noise ratio or, in order to further reduce backhaul signalling, the user equipment may report to the base station the signal to interference plus noise ratio obtained with a distributed configuration only if the one obtained with an uncoordinated configuration is below a predetermined threshold.

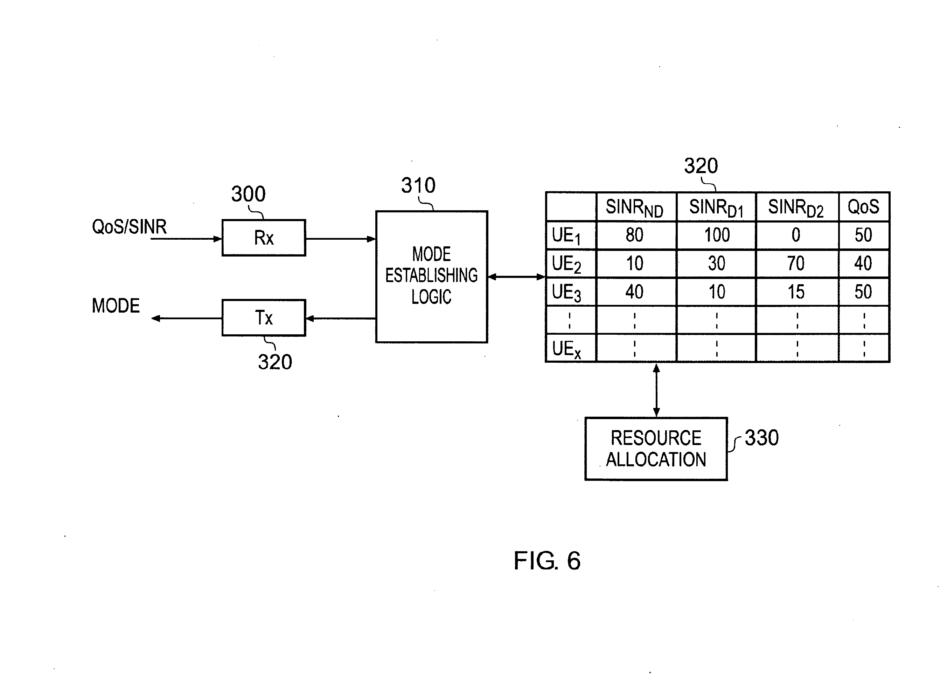

Figure 6 illustrates the main components of the network controller making this determination. As shown in Figure 6 the quality of service or signal to interference plus noise ratio for each user equipment in each of the modes in received by reception logic 300. This information is passed via mode establishing logic 310 to a table 320 which indicates the signal to interference plus noise ratio for each user equipment in each of the modes. The table 320 also stores an indication of the quality of service desired by that user equipment. Utilising the information stored in the table 320, it is then possible to decide on the most suitable mode to be used for communicating with that user equipment.

The preference generally is to transmit in an uncoordinated mode whenever possible since this requires no data to be distributed over the backhaul 160 between base stations to support that data transmission and instead enables coordination to be performed by a single base station within all of its sectors. Also, transmitting data in the uncoordinated mode provides more available backhaul for signalling to support any coordinated data transmissions; this use of the backhaul being possible even when not transmitting in the coordinated mode to reduce peak usage.

Hence, as can be seen from the example shown in Figure 6, although the best quality of service is provided to user equipment 1 when using the first coordinated mode shown in Figure 3, sufficient quality of service can be provided to the user equipment 1 when in an uncoordinated mode shown in Figure 2. Accordingly, this user equipment can be adequately served without utilising any of the backhaul resource.

However, for user equipment 2, insufficient quality of service is provided in any of the uncoordinated modes and likewise for the first coordinated mode. However, the second coordinated mode provides adequate quality of service to the user equipment, although this requires the allocation of some of the backhaul resource. Accordingly, when user equipment is identified as requiring some of these resources, an estimate of the amount of resource required to transmit in the coordinated mode is made and these are indicated in the resource allocation table 330. Once no more resource is available, as indicated by the resource allocation table 330, then no further user equipment may transmit in the coordinated mode. Accordingly, all subsequent user equipment will be required to transmit in an uncoordinated mode, even if this does not provide a sufficient quality-of service to the user equipment.

To help ensure that resources are allocated to those user equipment that most need it, the data in the table 320 may be arranged in order that those user equipment having the greatest need are prioritised over those who do not. Hence, those user equipment having the highest quality of service requirement may be considered first in order to help improve the likelihood that resources may be available, should they be required. Likewise, those user equipment which fail the most to achieve the desired quality of service level in an uncoordinated mode may be prioritised in order to help ensure that no user equipment is consistently denied an acceptable quality of service. In this way, it can be seen that the weakest user equipment can be allocated first based on realistic assumptions of backhaul channel resource availability.

Once this determination has been made for each user equipment by the mode establishing logic 310, then control signals are transmitted by transmission logic 320 to indicate how base stations are to transmit with the different user equipment.

Thereafter, returning to Figure 5, at step S20, data is exchanged between the base stations to enable to any coordinated data transmissions to occur.

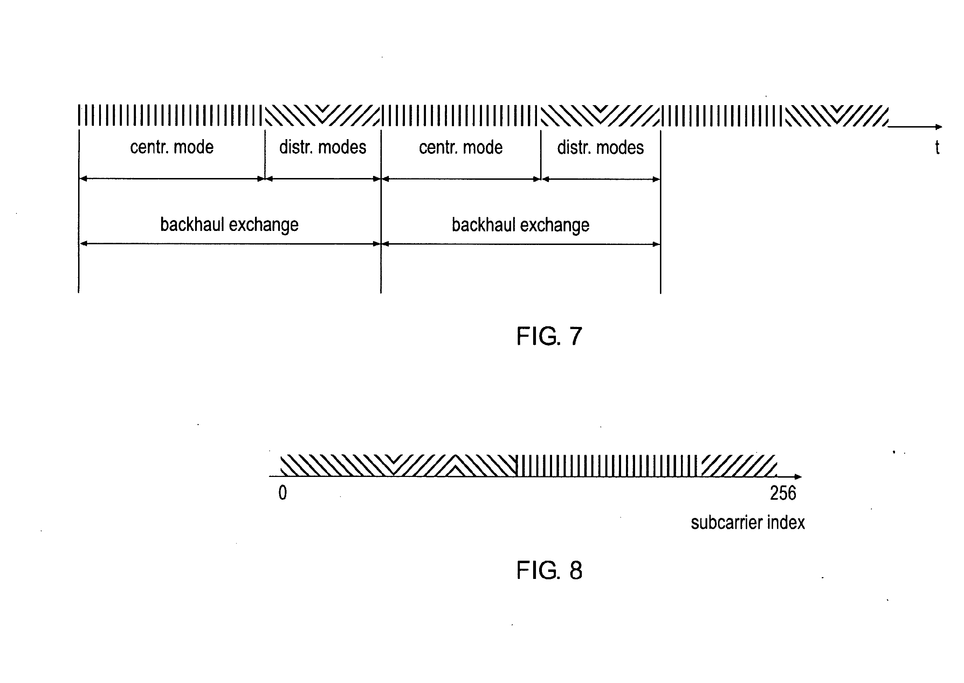

Figure 7 illustrates an implementation of this approach in a time-domain switching environment. As can be seen in this example arrangement, the uncoordinated' transmissions may occur in a first time period, followed by the coordinated mode transmissions. The relative time 61locations of each of these modes may be dynamically controlled as a function of the user equipment distribution, scheduler requests and the determination of which data transmissions are to occur in which of the modes. Also, data signalling can be distributed across an entire time slot in order to reduce peak data exchange levels between bases stations over the backhaul 160.

Likewise, Figure 8 illustrates an implementation in a frequency-domain switching environment. As can be seen, channels may be allocated to each of the modes. Again, the different channels may be dynamically allocated to meet the changing needs of the transmissions. It will be appreciated that hybrid approaches using a combination and frequency time domain switching are also possible.

It will be appreciated that the network controller 170 can be used to collect the different reports sent to each base station and to jointly allocate resources to the different configuration modes and choose the switching points between these. It will also be appreciated that the approach is applicable with different types of beam forming schemes, such as grid-of-beams based, sectorisation only and channel dependent weights (for example ZF or MET). Also, different code book of beams could be used for the centralised and distributed configurations.

Through this approach, optimisation of channel state can be achieved, making best use of backhaul resources, using current channel state information, in near real time and in a relatively simple and straightforward way since coordination is only performed when absolutely necessary and the extent of coordination is limited to a predictable and controllable level.

Although illustrative embodiments of the invention have been disclosed in detail herein, with reference to the accompanying drawings, it is understood that the invention is not limited to the precise embodiment shown and that various changes and modifications can be effected therein by one skilled in the art without departing from the scope of the invention as defined by the appended claims and their equivalents.

## Claims

1. A method of controlling data transmissions within a cellular telecommunications network (10) comprising user equipment (30) and a plurality of base stations (22-28), each base station (22-28) utilising a predetermined plurality of antennas to support data communication within its associated cell (W-Z), said method comprising the steps of:
determining at least one uncoordinated quality of service level provided to said user equipment (30) for data transmissions occurring in a corresponding at least one uncoordinated mode in which a plurality of antennas within a single cell (120A) supported by a single base station (22) perform data transmissions with said user equipment (30) and at least one coordinated quality of service level provided to user equipment (30) for data transmissions occurring in a corresponding at least one coordinated mode in which a plurality of antennas (22-26) in each of the associated at least two (W-Z) cells supported by at least two base stations (22-28) forming a corresponding virtual cell (120B; 120C) perform coordinated data transmissions with said user equipment (30); establishing at said network controller (170) which of said at least one uncoordinated mode and said at least one coordinated mode provides a desired quality of service to said user equipment (30); and
when said at least one coordinated mode provides said desired quality of service to said user equipment (30), signalling base stations (22-28) associated with said at least two cells (W-Z) to perform data transmissions with said user equipment (30) in said at least one coordinated mode.

2. The method of claim 1, wherein said step of determining comprises determining a plurality of coordinated quality of service levels provided to user equipment for data transmissions occurring in a corresponding plurality of coordinated modes, each of said plurality of coordinated modes utilising a plurality of antennas and each of said plurality of coordinated modes utilising antennas from differing at least two cells, said step of establishing comprises establishing which of said at least one uncoordinated mode and said plurality of coordinated modes provides said desired quality of service to said user equipment and said step of signalling comprises, when one of said plurality of coordinated modes provides said desired quality of service to said user equipment, signalling base stations associated with said differing at least two cells to perform data transmissions with said user equipment in said one of said plurality of coordinated modes.

3. The method of claim 2, wherein each of said plurality of coordinated modes utilises a plurality of antennas to form said corresponding virtual cell comprising a predetermined number of sectors (1-6), each sector within said virtual cell being provided by one base station associated with said differing at least two cells.

4. The method of claim 3, wherein said number of sectors provided by each base station comprise a subset of those sectors supported by that base station.

5. The method of claim 4, wherein sectors within said virtual cell are adjacent each other.

6. The method of claim 5, wherein said step of establishing comprises selecting said at least one uncoordinated mode when said at least one uncoordinated quality of service level exceeds a predetermined threshold level.

7. The method of claim 6, wherein said step of establishing comprises selecting said at least one uncoordinated mode when said at least one uncoordinated quality of service level exceeds said at least one of said coordinated quality of service levels.

8. The method of claim 5, comprising the step of:
when said at least one uncoordinated mode provides said desired quality of service to said user equipment, signalling said single one of said plurality of base stations to perform data transmissions with said user equipment in said at least one uncoordinated mode.

9. The method of claim 8, wherein there is provided a plurality of user equipments and said steps of determining and establishing are performed for each of said plurality of user equipments, said method comprising the step of:
ordering indications of user equipment required performed data transmissions in said at least one coordinated mode in a list in accordance with a predetermined criteria.

10. The method of claim 9, wherein said step of ordering comprises prioritising in said list indications of user equipment having a higher quality of service requirement.

11. The method of claim 9, comprising the step of:
determining for each user equipment, in an order specified by said list, an amount of signalling resources required to be allocated to enable that user equipment to perform data transmissions in said at least one coordinated mode.

12. The method of claim 11, comprising the step of:
determining for each user equipment, in said order specified by said list, whether sufficient unallocated signalling resources remain to enable that user equipment to perform data transmissions in said at least one coordinated mode.

13. The method of claim 1, comprising the steps of:
multiplexing said data transmissions of said user equipment in said at least one coordinated and uncoordinated modes; and
adjusting said multiplexing in response to changes in transmissions performed in said at least one coordinated and uncoordinated modes.

14. The method of claim 13, wherein said step of signalling occurs during data transmissions with said user equipment in said at least one uncoordinated mode to reduce peak demand on signalling resources.

15. A network controller (170) for controlling data transmissions within a cellular telecommunications network (10) comprising user equipment (30) and a plurality of base stations (22-28), each base station (22-28) utilising a predetermined plurality of antennas to support data communication within its associated cell (W-Z), said network controller (170) comprising:
reception logic (300) operable to receive at least one uncoordinated quality of service level provided to said user equipment (30) for data transmissions occurring in a corresponding at least one uncoordinated mode in which a plurality of antennas within a single cell (120A) supported by a single base station (22) perform data transmissions with said user equipment (30) and at least one coordinated quality of service level provided to user equipment (30) for data transmissions occurring in a corresponding at least one coordinated mode in which a plurality of antennas (22-26) in each of the associated at least two cells (W-Z) supported by at least two base stations (22-28) forming a corresponding virtual cell (120B; 120C) perform coordinated data transmissions with said user equipment (30);
mode establishing logic (310) operable to establish which of said at least one uncoordinated mode and said at least one coordinated mode provides a desired quality of service to said user equipment (30); and
signalling logic (320) operable, when said at least one coordinated mode provides said desired quality of service to said user equipment (30); to signal base stations (22-28) associated with said at least two cells (W-Z) to perform data transmissions with said user equipment (30) in said at least one coordinated mode.

## Patentansprüche

1. Verfahren zum Steuern von Datenübertragungen in einem zellularen Telekommunikationsnetzwerk (10), umfassend Benutzerendgeräte (30) und eine Vielzahl von Basisstationen (22-28), wobei jede Basisstation (22-28) eine vorausbestimmte Vielzahl von Antennen verwendet, um die Datenkommunikation innerhalb ihrer zugeordneten Zelle (W-Z) zu unterstützen, wobei besagtes Verfahren folgende Schritte umfasst:
Bestimmen von mindestens einer unkoordinierten Dienstqualitätsstufe, die besagten Benutzerendgeräten (30) für Datenübertragungen bereitgestellt wird, die in einem entsprechenden mindestens einen unkoordinierten Modus erfolgen, in dem eine Vielzahl von Antennen innerhalb einer einzelnen Zelle (120A), die von einer einzelnen Basisstation (22) unterstützt wird, Datenübertragungen mit besagten Benutzerendgeräten (30) durchführen, und mindestens einer koordinierten Dienstqualitätsstufe, die Benutzerendgeräten (30) für Datenübertragungen bereitgestellt wird, die in einem entsprechenden mindestens einen koordinierten Modus erfolgen, in dem eine Vielzahl von Antennen (22-26) in jeder der zugeordneten mindestens zwei (W-Z) Zellen, die von mindestens zwei Basisstationen (22-28) unterstützt werden, die eine entsprechende virtuelle Zelle (120B; 120C) bilden, koordinierte Datenübertragungen mit besagten Benutzerendgeräten (30) durchführen;
Ermitteln am besagten Netzwerkcontroller (170), welcher des besagten mindestens einen unkoordinierten Modus und besagten mindestens einen koordinierten Modus eine gewünschte Dienstqualität für besagte Benutzerendgeräte (30) bereitstellt; und
wenn der besagte mindestens eine koordinierte Modus die besagte gewünschte Dienstqualität für besagte Benutzerendgeräte (30) bereitstellt, das Melden an Basisstationen (22-28), die besagten mindestens zwei Zellen (W-Z) zugeordnet sind, Datenübertragungen mit besagten Benutzerendgeräten (30) im besagten mindestens einen koordinierten Modus durchzuführen.

2. Verfahren nach Anspruch 1, wobei besagter Schritt des Bestimmens das Bestimmen einer Vielzahl von koordinierten Dienstqualitätsstufen umfasst, die Benutzerendgeräten für Datenübertragungen bereitgestellt werden, die in einer entsprechenden Vielzahl von koordinierten Modi erfolgen, wobei jeder der besagten Vielzahl von koordinierten Modi eine Vielzahl von Antennen verwendet und jeder der besagten Vielzahl von koordinierten Modi Antennen von unterschiedlichen mindestens zwei Zellen verwendet, wobei besagter Schritt des Ermittelns das Ermitteln umfasst, welcher des besagten mindestens einen unkoordinierten Modus und besagter Vielzahl von koordinierten Modi besagte gewünschte Dienstqualität für besagte Benutzerendgeräte bereitstellt, und wobei besagter Schritt des Meldens, wenn einer der besagten Vielzahl von koordinierten Modi besagte gewünschte Dienstqualität für besagte Benutzerendgeräte bereitstellt, das Melden an Basisstationen, die besagten unterschiedlichen mindestens zwei Zellen zugeordnet sind, Datenübertragungen mit besagten Benutzerendgeräten im besagten einen von besagter Vielzahl von koordinierten Modi durchzuführen.

3. Verfahren nach Anspruch 2, wobei jeder der besagten Vielzahl von koordinierten Modi eine Vielzahl von Antennen verwendet, um besagte entsprechende virtuelle Zelle zu bilden, umfassend eine vorausbestimmte Anzahl von Sektoren (1-6), wobei jeder Sektor innerhalb der besagten virtuellen Zelle von einer Basisstation bereitgestellt wird, die besagten unterschiedlichen mindestens zwei Zellen zugeordnet ist.

4. Verfahren nach Anspruch 3, wobei besagte Anzahl von Sektoren, die von jeder Basisstation bereitgestellt werden, einen Teilsatz von jenen Sektoren umfassen, die von jener Basisstation unterstützt werden.

5. Verfahren nach Anspruch 4, wobei Sektoren innerhalb der besagten virtuellen Zelle aneinandergrenzen.

6. Verfahren nach Anspruch 5, wobei besagter Schritt des Ermittelns das Auswählen des besagten mindestens einen unkoordinierten Modus umfasst, wenn die besagte mindestens eine unkoordinierte Dienstqualitätsstufe eine vorausbestimmte Grenzwertstufe überschreitet.

7. Verfahren nach Anspruch 6, wobei besagter Schritt des Ermittelns das Auswählen des besagten mindestens einen unkoordinierten Modus umfasst, wenn die besagte mindestens eine unkoordinierte Dienstqualitätsstufe die besagte mindestens eine der besagten koordinierten Dienstqualitätsstufen überschreitet.

8. Verfahren nach Anspruch 5, umfassend folgenden Schritt:
wenn der besagte mindestens eine unkoordinierte Modus die besagte gewünschte Dienstqualität für besagte Benutzerendgeräte bereitstellt, das Melden an besagte Einzelne von besagter Vielzahl von Basisstationen, Datenübertragungen mit besagten Benutzerendgeräten im besagten mindestens einen unkoordinierten Modus durchzuführen.

9. Verfahren nach Anspruch 8, wobei eine Vielzahl von Benutzerendgeräten bereitgestellt wird und besagte Schritte des Bestimmens und Ermittelns für jedes der besagten Vielzahl von Benutzerendgeräten durchgeführt werden, wobei das Verfahren folgenden Schritt umfasst:
Reihen von Angaben von Benutzerendgeräten, die für die durchgeführten Datenübertragungen im besagten mindestens einen koordinierten Modus erforderlich sind, in einer Liste in Übereinstimmung mit einem vorausbestimmten Kriterium.

10. Verfahren nach Anspruch 9, wobei besagter Schritt des Reihens das Priorisieren in besagter Liste der Angaben von Benutzerendgeräten mit einer höheren Dienstqualitätsanforderung umfasst.

11. Verfahren nach Anspruch 9, umfassend folgenden Schritt:
Bestimmen für jedes Benutzerendgerät, in einer von besagter Liste spezifizierten Reihenfolge, einer Menge von Melderessourcen, die zugewiesen werden müssen, um es jenen Benutzerendgeräten zu ermöglichen, Datenübertragungen im besagten mindestens einen koordinierten Modus durchzuführen.

12. Verfahren nach Anspruch 11, umfassend folgenden Schritt:
Bestimmen für jedes Benutzerendgerät, in von besagter Liste spezifizierter besagter Reihenfolge, ob ausreichend nicht-zugewiesene Melderessourcen übrigbleiben, um es jenem Benutzerendgerät zu ermöglichen, Datenübertragungen im besagten mindestens einen koordinierten Modus durchzuführen.

13. Verfahren nach Anspruch 1, umfassend folgende Schritte:
Multiplexen besagter Datenübertragungen von besagten Benutzerendgeräten im besagten mindestens einen koordinierten und unkoordinierten Modus; und
Anpassen des besagten Multiplexens in Bezug auf Änderungen in den Übertragungen, die im besagten mindestens einen koordinierten und unkoordinierten Modus durchgeführt werden.

14. Verfahren nach Anspruch 13, wobei besagter Schritt des Meldens während Datenübertragungen mit besagten Benutzerendgeräten im besagten mindestens einen unkoordinierten Modus erfolgt, um Spitzenlasten auf Melderessourcen zu verringern.

15. Netzwerkcontroller (170) zum Steuern von Datenübertragungen in einem zellularen Telekommunikationsnetzwerk (10), umfassend Benutzerendgeräte (30) und eine Vielzahl von Basisstationen (22-28), wobei jede Basisstation (22-28) eine vorausbestimmte Vielzahl von Antennen verwendet, um die Datenkommunikation innerhalb ihrer zugeordneten Zelle (W-Z) zu unterstützen, wobei besagter Netzwerkcontroller (170) Folgendes umfasst:
Empfangslogik (300), die betriebsfähig ist, um mindestens eine unkoordinierte Dienstqualitätsstufe zu empfangen, die besagten Benutzerendgeräten (30) für Datenübertragungen bereitgestellt wird, die in einem entsprechenden mindestens einen unkoordinierten Modus erfolgen, in dem eine Vielzahl von Antennen innerhalb einer einzelnen Zelle (120A), die von einer einzelnen Basisstation (22) unterstützt wird, Datenübertragungen mit besagten Benutzerendgeräten (30) durchführen, und mindestens eine koordinierte Dienstqualitätsstufe, die Benutzerendgeräten (30) für Datenübertragungen bereitgestellt wird, die in einem entsprechenden mindestens einen koordinierten Modus erfolgen, in dem eine Vielzahl von Antennen (22-26) in jeder der zugeordneten mindestens zwei Zellen (W-Z), die von mindestens zwei Basisstationen (22-28) unterstützt werden, die eine entsprechende virtuelle Zelle (120B; 120C) bilden, koordinierte Datenübertragungen mit besagten Benutzerendgeräten (30) durchführen;
Modusermittlungslogik (310), die betriebsfähig ist, um zu ermitteln, welcher des besagten mindestens einen unkoordinierten Modus und besagten mindestens einen koordinierten Modus eine gewünschte Dienstqualität für besagte Benutzerendgeräte (30) bereitstellt; und
Meldelogik (320), die betriebsfähig ist, um, wenn der besagte mindestens eine koordinierte Modus die besagte gewünschte Dienstqualität für besagte Benutzerendgeräte (30) bereitstellt, an Basisstationen (22-28), die besagten mindestens zwei Zellen (W-Z) zugeordnet sind, zu melden, Datenübertragungen mit besagten Benutzerendgeräten (30) im besagten mindestens einen koordinierten Modus durchzuführen.

## Revendications

1. Procédé de commande de transmissions de données à l'intérieur d'un réseau de télécommunications cellulaire (10) comprenant un équipement utilisateur (30) et une pluralité de stations de base (22 à 28), chaque station de base (22 à 28) utilisant une pluralité prédéterminée d'antennes pour prendre en charge une communication de données à l'intérieur de sa cellule associée (W à Z), ledit procédé comprenant les étapes suivantes ;
déterminer au moins un niveau de qualité de service non coordonnée fourni audit équipement utilisateur (30) pour des transmissions de données se produisant dans au moins un mode non coordonné correspondant dans lequel une pluralité d'antennes à l'intérieur d'une cellule unique (120A) prise en charge par une station de base unique (22) exécutent des transmissions de données avec ledit équipement utilisateur (30) et au moins un niveau de qualité de service coordonnée fourni à l'équipement utilisateur (30) pour des transmissions de données se produisant dans au moins un mode coordonné correspondant dans lequel une pluralité d'antennes (22 à 26), dans chacune des au moins deux cellules (W à Z) associées prises en charge par au moins deux stations de base (22 à 28) formant une cellule virtuelle correspondante (120B ; 120C), exécutent des transmissions de données coordonnées avec ledit équipement utilisateur (30) ;
établir, au niveau dudit contrôleur de réseau (170), quel mode parmi ledit au moins un mode non coordonné et ledit au moins un mode coordonné fournit une qualité de service souhaitée audit équipement utilisateur (30) ; et
lorsque ledit au moins un mode coordonné fournit ladite qualité de service souhaitée audit équipement utilisateur (30), signaler aux stations de base (22 à 28) associées auxdites au moins deux cellules (W à Z) d'exécuter des transmissions de données avec ledit équipement utilisateur (30) dans ledit au moins un mode coordonné.

2. Procédé selon la revendication 1, dans lequel ladite étape de détermination comprend la détermination d'une pluralité de niveaux de qualité de service coordonnés fournis à l'équipement utilisateur pour des transmissions de données se produisant dans une pluralité correspondante de modes coordonnés, chaque mode parmi ladite pluralité de modes coordonnés utilisant une pluralité d'antennes et chaque mode parmi ladite pluralité de modes coordonnés utilisant des antennes d'au moins deux cellules différentes, ladite étape d'établissement consistant à établir quel mode parmi ledit au moins un mode non coordonné et ladite pluralité de modes coordonnés fournit ladite qualité de service souhaitée audit équipement utilisateur et ladite étape de signalisation consistant, lorsqu'un mode parmi ladite pluralité de modes coordonnés fournit ladite qualité de service souhaitée audit équipement utilisateur, à signaler des stations de base associées auxdites au moins deux cellules différentes pour exécuter des transmissions de données avec ledit équipement utilisateur dans ledit mode parmi ladite pluralité de modes coordonnés.

3. Procédé selon la revendication 2, dans lequel chaque mode parmi ladite pluralité de modes coordonnés utilise une pluralité d'antennes pour former ladite cellule virtuelle correspondante comprenant un nombre prédéterminé de secteurs (1 à 6), chaque secteur à l'intérieur de ladite cellule virtuelle étant fourni par une station de base associée auxdites au moins deux cellules différentes.

4. Procédé selon la revendication 3, dans lequel ledit nombre de secteurs fournis par chaque station de base comprend un sous-ensemble de ces secteurs pris en charge par cette station de base.

5. Procédé selon la revendication 4, dans lequel les secteurs à l'intérieur de ladite cellule virtuelle sont à côté les uns des autres.

6. Procédé selon la revendication 5, dans lequel ladite étape d'établissement comprend la sélection dudit au moins un mode non coordonné lorsque ledit au moins un niveau de qualité de service non coordonnée dépasse un niveau de seuil prédéterminé.

7. Procédé selon la revendication 6, dans lequel ladite étape d'établissement comprend la sélection dudit au moins un mode non coordonné lorsque ledit au moins un niveau de qualité de service non coordonnée dépasse ledit au moins un niveau parmi lesdits niveaux de qualité de service coordonnée.

8. Procédé selon la revendication 5, comprenant l'étape suivante :
lorsque ledit au moins un mode non coordonné fournit ladite qualité de service souhaitée audit équipement utilisateur, signaler à ladite station de base unique parmi ladite pluralité de stations de base d'exécuter des transmissions de données avec ledit équipement utilisateur dans ledit au moins un mode non coordonné.

9. Procédé selon la revendication 8, dans lequel on prévoit une pluralité d'équipements utilisateur et lesdites étapes de détermination et d'établissement sont exécutées pour chaque équipement utilisateur parmi ladite pluralité d'équipements utilisateur, ledit procédé comprenant l'étape suivante :
classer des indications de transmissions de données exécutées requises d'équipement utilisateur dans ledit au moins un mode coordonné dans une liste conformément à des critères prédéterminés.

10. Procédé selon la revendication 9, dans lequel ladite étape de classement consiste à classer par ordre de priorité dans ladite liste des indications d'équipement utilisateur ayant une exigence de qualité de service supérieure.

11. Procédé selon la revendication 9, comprenant l'étape suivante :
déterminer pour chaque équipement utilisateur, dans un ordre spécifié par ladite liste, une quantité de ressources de signalisation devant être attribuées pour permettre à cet équipement utilisateur d'exécuter des transmissions de données dans ledit au moins un mode coordonné.

12. Procédé selon la revendication 11, comprenant l'étape suivante :
déterminer pour chaque équipement utilisateur, dans ledit ordre spécifié par ladite liste, si une quantité suffisante de ressources de signalisation non attribuées reste pour permettre à cet équipement utilisateur d'exécuter des transmissions de données dans ledit au moins un mode coordonné.

13. Procédé selon la revendication 1, comprenant les étapes suivantes :
multiplexer lesdites transmissions de données dudit équipement utilisateur dans ledit au moins un mode parmi les modes coordonnés et non coordonnés ; et
ajuster ledit multiplexage en réponse aux changements de transmissions exécutées dans ledit au moins un mode parmi les modes coordonnés et non coordonnés.

14. Procédé selon la revendication 13, dans lequel ladite étape de signalisation se produit durant des transmissions de données avec ledit équipement utilisateur dans ledit au moins un mode non coordonné afin de réduire un pic de demande sur des ressources de signalisation.

15. Contrôleur de réseau (170) pour commander des transmissions de données à l'intérieur d'un réseau de télécommunications cellulaire (10) comprenant un équipement utilisateur (30) et une pluralité de stations de base (22 à 28), chaque station de base (22 à 28) utilisant une pluralité prédéterminée d'antennes pour prendre en charge une communication de données à l'intérieur de sa cellule associée (W à Z), ledit contrôleur de réseau (170) comprenant :
une logique de réception (300) permettant de recevoir au moins un niveau de qualité de service non coordonné fourni audit équipement utilisateur (30) pour des transmissions de données se produisant dans au moins un mode non coordonné correspondant dans lequel une pluralité d'antennes à l'intérieur d'une cellule unique (120A) prise en charge par une station de base unique (22) exécutent des transmissions de données avec ledit équipement utilisateur (30) et au moins un niveau de qualité de service coordonné fourni à l'équipement utilisateur (30) pour des transmissions de données se produisant dans au moins un mode coordonné correspondant dans lequel une pluralité d'antennes (22 à 26), dans chacune des au moins deux cellules (W à Z) associées prises en charge par au moins deux stations de base (22 à 28) formant une cellule virtuelle correspondante (120B ; 120C), exécutent des transmissions de données coordonnées avec ledit équipement utilisateur (30) ;
une logique d'établissement de mode (310) permettant d'établir quel mode parmi ledit au moins un mode non coordonné et ledit au moins un mode coordonné fournit une qualité de service souhaitée audit équipement utilisateur (30) ; et
une logique de signalisation (320) permettant, lorsque ledit au moins un mode coordonné fournit ladite qualité de service souhaitée audit équipement utilisateur (30), de signaler aux stations de base (22 à 28) associées auxdites au moins deux cellules (W à Z) d'exécuter des transmissions de données avec ledit équipement utilisateur (30) dans ledit au moins un mode coordonné.
